# EUROPÄISCHE PATENTSCHRIFT

(11) **EP 1 085 390 B1**
(45) Veröffentlichungstag und Bekanntmachung des Hinweises auf die Patenterteilung: **22.09.2004**
(21) Anmeldenummer: 00116524.0
(22) Anmeldetag: 31.07.2000
(51) Int. Cl.: G05B 23/02

(54) **Verfahren und Vorrichtung zur Prozessvisualisierung**
Method and device for process visualising
Procédé et dispositif de visualisation de processus

(30) Priorität: 17.08.1999 DE 19938963
(43) Veröffentlichungstag der Anmeldung: 21.03.2001
(73) Patentinhaber: SIEMENS AKTIENGESELLSCHAFT, 80333 München (DE)
(72) Erfinder: Bieber, Jürgen, 76275 Ettlingen (DE)

(56) Entgegenhaltungen:
- WO-A-98/24094
- US-A- 5 226 118
- Klaus Zinser: "Neue Formen und Medien der Prozessvisualisierung", ATP Automatisierungstechnische Praxis 35 (1993) September, No. 9, Seiten 499-504, München, DE

## Beschreibung

Die Erfindung betrifft ein Verfahren und eine Vorrichtung zur Prozeßvisualisierung.

Es ist bereits bekannt, zum Zwecke einer Anlagenführung und Prozeßbedienung in der Automatisierungstechnik zweidimensionale Bildelemente auf einer Bildanzeigeeinheit darzustellen. Einem Bediener wird so die Möglichkeit gegeben, die Anlage und deren Prozeßzustand im Zusammenhang mit dargestellten aktuellen Prozeßwerten zu beobachten und zu bedienen. Die zur Verfügung stehenden Bildobjekte geben in der Regel nur teilweise einen Überblick über das zu bedienende Objekt bzw. Anlagenteil. Gerade bei komplexeren Prozessen ist es wünschenswert, daß der Bediener in einem Störfall einen guten überblick über die Anlage hat und eine rasche Fehlerlokalisierung vornehmen kann, so daß auch ein schnelles Eingreifen schergestellt ist. Dies wird bei bekannten Anlagen dadurch erreicht, daß mehrere zweidimensionale Ansichten eines Anlagenteils projektiert werden, zwischen denen der Bediener bei der Prozeßbeobachtung umschalten kann. Weiterhin ist es zu diesem Zweck bereits bekannt, mittels einer Kamera erzeugte Live-Videobilder der Anlage auf der Bildanzeigeeinheit in ein projektiertes Anlagenbild einzublenden. Bei beiden Vorgehensweisen ist die Anlagenführung komplex und kann auch unüberschaubar werden.

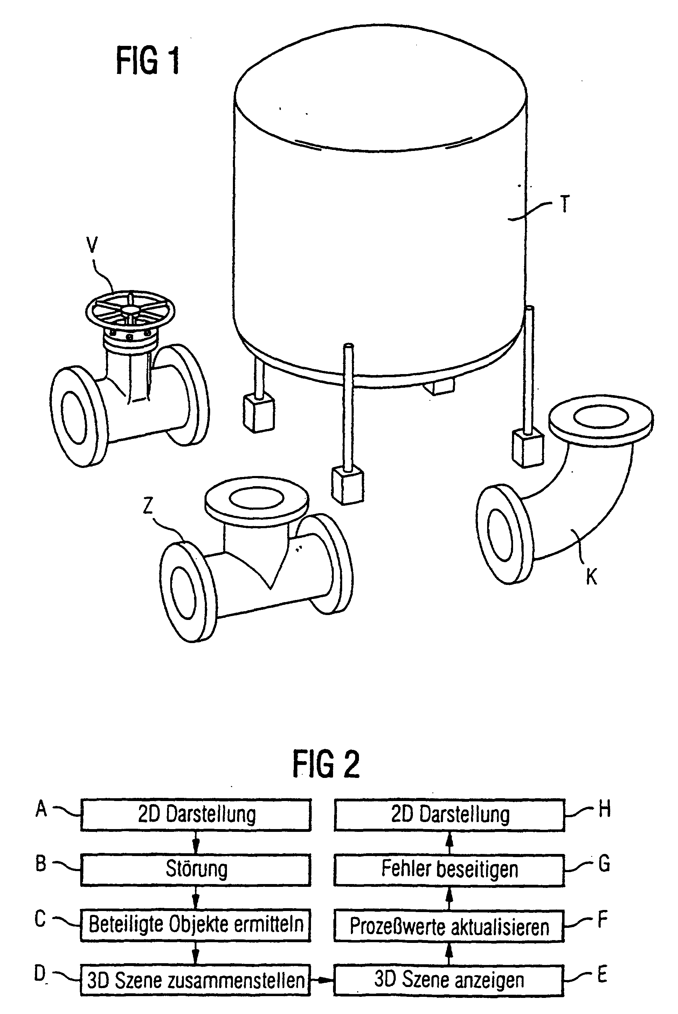

In einem in der Zeitschrift ATP Automatisierungstechnische Praxis 35 (1993) September, No. 9, Seiten 499 - 504, veröffentlichten Aufsatz sind anhand eines Beispiels aus der Kraftwerksführung neue Formen und Medien der Prozessvisualisierung beschrieben. Dabei werden Prozessübersichtsbilder zur besseren Prozessüberwachung und Prozessführung sowie prozesszustandsgerechte Detailbilder zur Unterstützung bei Diagnoseund Analyseaufgaben vorgestellt. In der Figur 2 dieses Aufsatzes ist eine Übersichtsdarstellung des Kraftwerksprozesses mittels Massendaten gezeigt. Darin stellt jeder Strich eine nicht-binäre Meßgröße dar, die im Beharrungszustand des Kraftwerksprozesses waagrecht verläuft und bei Abweichungen ihren Winkel und gleichzeitig ihre Stärke verändert, so dass die Abweichung vom Normalzustand auf einen Blick augenfällig wird.

Ausgehend von diesem Stand der Technik liegt der Erfindung die Aufgabe zugrunde, einen Weg aufzuzeigen, wie die oben beschriebenen Nachteile beseitigt werden können.

Diese Aufgabe wird durch ein Verfahren mit den im Anspruch 1 und durch eine Vorrichtung mit den im Anspruch 5 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß die Beobachtung eines laufenden Prozesses und die Anlagenführung für den Bediener erleichtert sind, so daß dieser beim Auftreten von Störfällen einen besseren Überblick über die Anlage erhält und schnellere Maßnahmen zur Fehlerbeseitigung in die Wege leiten kann. Da im Rahmen der automatischen dreidimensionalen Anzeige nur diejenigen Anlagenteile dargestellt werden, die für eine aufgetretene Störung verantwortlich sein können, ist die Übersichtlichkeit der Darstellung auf der Bildanzeigeeinheit verbessert. Durch die zweidimensionale Darstellung des oder der Anlagenteile im normalen Prozesszustand wird erreicht, daß die Signalverarbeitungseinheit der Anlage im normalen Prozeßzustand nicht mit Rechenaufwand beschäftigt wird, den eine dreidimensionale Bildschirmdarstellung mit sich bringen würde.

Die Merkmale der Ansprüche 2 und 6 bieten den Vorteil, daß der Bediener einzelne Eigenschaften der dreidimensionalen Darstellung, wie beispielsweise Rotation, Größe, Farbe und Skalierung, gezielt verändern kann, so daß die Übersichtlichkeit der Darstellung weiter verbessert ist.

Weitere vorteilhafte Eigenschaften der Erfindung ergeben sich aus der beispielhaften Erläuterung der Erfindung anhand der Zeichnungen. Es zeigt:
- FIG 1: eine dreidimensionale Darstellung einzelner Objekte einer Anlage,
- FIG 2: ein Diagramm zur Veranschaulichung eines Ausführungsbeispiels für den zeitlichen Ablauf beim Auftreten einer Störung,
- FIG 3: eine dreidimensionale Darstellung eines Szenarios, bei dem Objekte zu einer dreidimensionalen Szene zusammengefaßt sind, und
- FIG 4: ein Blockschaltbild einer Vorrichtung zur Prozeßvisualisierung.

Die Figur 1 zeigt eine dreidimensionale Darstellung einzelner Objekte einer Anlage, nämlich eines Ventils V, eines Abzweigers Z, eines Krümmers K und eines Tanks T. Diese dreidimensionale Darstellung einzelner Objekte wird im Rahmen der Projektierungsphase von den Prozeß beschreibenden Bildschirmdarstellungen zusätzlich zu zweidimensionalen Darstellungen derselben Objekte erstellt. Beide Darstellungsarten stehen dann für die spätere Prozeßbeobachtung auf der Bildanzeigeeinheit zur Verfügung.

Liegt während des Prozeßablaufes ein normaler Prozeßzustand vor, dann liegen die von Detektoren bzw. Sensoren ermittelten Prozeßwerte jeweils innerhalb eines zulässigen Toleranzintervalls. Dies wird von einer Signalverarbeitungseinheit, die an die Detektoren angeschlossen ist, erkannt. Die Signalverarbeitungseinheit, bei der es sich um einen Prozeßrechner handelt, steuert daraufhin die Anzeige auf der Bildanzeigeeinheit in dem Sinne, daß dort eine zweidimensionale Darstellung einzelner Anlagenteile oder - bei kleineren Prozessen - der gesamten Anlage erfolgt. Bei dieser zweidimensionalen Darstellung werden die während der Projektierungsphase erstellten zweidimensionalen Bildschirmdarstellungen angezeigt, wobei diese auch Prozeßwerte umfassen. Diese Prozeßwerte können bei Bedarf vom Bediener beeinflußt werden, beispielsweise durch eine Eingabe neuer Sollwerte mittels einer Bedientastatur oder mittels einer Touch-Screen-Eingabe.

Erkennt die Signalverarbeitungseinheit hingegen anhand der ihr zugeführten Ausgangssignale der Detektoren, daß ein kritischer Zustand vorliegt, bei dem einer oder mehrere der abgefragten Prozeßwerte außerhalb des jeweils vorgegebenen Toleranzintervalls liegen, dann werden alle beteiligten Objekte, die an diesem kritischen Prozeßzustand beteiligt sind, in dem Sinne überprüft, ob für sie jeweils eine dreidimensionale Darstellung vorliegt. Die beteiligten Objekte können beispielsweise Regler, Ventile, Abzweiger, Krümmer, Tanks, Motoren etc. sein. Beteiligte Objekte, die eine dreidimensionale Darstellung besitzen, werden dann automatisch in ihrer dreidimensionalen Darstellung aufgeblendet und sind dabei zu einer dreidimensionalen Szene zusammengefaßt, die alle Objekte enthält, die am vorliegenden kritischen Prozeßzustand beteiligt sind, d.h. als Verursacher des Fehlers in Frage kommen.

In dieser dreidimensionalen Szene werden dem Bediener zusätzlich die relevanten Stellen des Prozesses signalisiert. Durch diese Darstellung kann der Bediener einen vorliegenden Fehler leichter erkennen und durch geeignete Bedienungen korrigieren.

Beim vorstehend beschriebenen Ausführungsbeispiel erfolgt demnach beim Vorliegen eines normalen Prozeßzustandes eine zweidimensionale Darstellung von Objekten der Anlage auf der Bildanzeigeeinheit und erst beim Auftreten einer Störung erfolgt eine automatische Umschaltung auf eine dreidimensionale Darstellung, in welcher nur die am kritischen Prozeßzustand beteiligten Objekte der Prozeßanlage beteiligt sind. Dies hat den Vorteil, daß im normalen Betriebszustand der Prozeßrechner nicht unnötigerweise mit einer komplexen Darstellung von dreidimensionalen Objekten und deren Aktualisierung, beispielsweise bei der Bildanwahl, beschäftigt wird. Weiterhin erhält der Bediener durch die im Fehlerfall automatisch erscheinende räumliche Darstellung eines kompletten Anlagenteils eine schnelle Hilfe für die Führung der Anlage und die Fehlerbeseitigung.

Anhand der Figur 2 wird nachstehend ein Ausführungsbeispiel für den zeitlichen Ablauf beim Auftreten einer Störung gegeben.

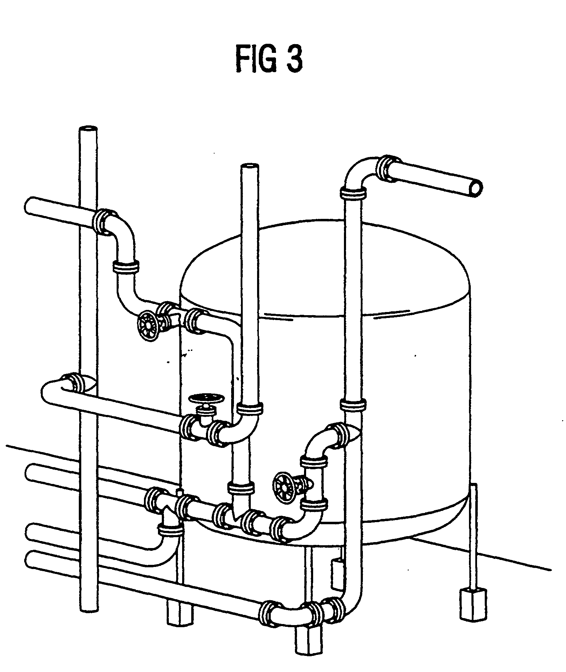

Zunächst liegt ein normaler Prozeßzustand vor, bei welchem die von den Detektoren gelieferten Signale innerhalb des jeweiligen Toleranzintervalls liegen. Die Objekte der Anlage werden zusammen mit zugehörigen Prozeßwerten zweidimensional auf der Bildanzeigeeinheit angezeigt (Block A). Übersteigt dann beispielsweise die in einem Kessel gemessene Temperatur den Wert von 100° Celsius, dann wird dies vom Prozeßrechner als Störung erkannt (Block B). Mit Hilfe des Prozeßrechners erfolgt daraufhin eine Suche nach beteiligten Objekten zum Anlagenteil Kessel, die als verursacher für die aufgetretene Störung in Frage kommen (Block C). Es wird überprüft, ob diese Objekte eine dreidimensionale Darstellung haben und es erfolgt eine Zusammenfügung der dreidimensionalen Darstellungen der Objekte zu einer dreidimensionalen Szene, wobei von Verbindungspunkten Gebrauch gemacht wird, die während der Projektierungsphase definiert wurden (Block D). Danach erfolgt eine Darstellung der dreidimensionalen Szene auf der Bildanzeigeeinheit (Block E). Eine derartige dreidimensionale Szene ist in der Figur 3 veranschaulicht.

Im nächsten Schritt erfolgt eine automatische Aktualisierung der Prozeßwerte von in der dreidimensionalen Szene dargestellten Objekten (Block F). Anhand dieser Prozeßwerte, der dreidimensionalen Darstellung der beteiligten Objekte und angezeigter Betriebszustände erkennt der Bediener die Ursache der Störung und führt solange eine Bedienung der Anlage durch, bis der Fehler beseitigt ist (Block G). Liegen die von den Detektoren abgeleiteten Prozeßwerte wieder innerhalb der zulässigen Toleranzintervalle, dann erfolgt unter Steuerung durch den Prozeßrechner ein automatisches Ausblenden der dreidimensionalen Szene und ein automatisches Wiedereinblenden einer zweidimensionalen Darstellung (Block H).

Nach alledem erfolgt beim gezeigten Ausführungsbeispiel beim Erkennen einer Prozeßstörung eine automatische Einblendung einer dynamisch zusammengestellten dreidimensionalen Prozeßszene, wobei die Dynamik darin zu sehen ist, daß jeweils nur diejenigen Objekte der Anlage zu einer dreidimensionalen Szene zusammengefaßt und angezeigt werden, die am vorliegenden Prozeßzustand beteiligt sind, d.h. die für die Störung verantwortlich sein können. Der Bediener kann alle relevanten Stellen auf einen Blick betrachten und die aktuellen Prozeßwerte wie Druck und Temperatur an den verschiedensten Stellen der angezeigten Objekte abrufen, ohne das Bild wechseln zu müssen und ohne auf eine andere Ansicht eines Objektes umschalten zu müssen. Es werden jeweils alle für die vorliegende Störung relevanten Objekte angezeigt, wobei gleichzeitig auch die jeweils aktuellen Prozeßwerte und Betriebszustände dargestellt werden. Diese Anzeige wird vom Prozeßrechner automatisch vorgenommen, der dabei von einer Bibliothek Gebrauch macht, welche dreidimensionale Darstellungen von Objekten enthält. Diese Objekte sind vorzugsweise über Verbindungspunkte miteinander verbunden, aufgrund welcher eine dynamische Verbindung der vorhandenen dreidimensionalen Darstellungen der Objekte zu einer dreidimensionalen Szene erfolgen kann, wobei diese Zusammenstellung auch von den Ausgangssignalen der Detektoren bzw. Sensoren beeinflußt wird.

Dies ermöglicht es dem Bediener, das jeweils vorliegende Problem schnell und effektiv zu lokalisieren und dessen Beseitigung zu veranlassen.

In vorteilhafter Weise sind die Eigenschaften der dreidimensionalen Darstellung des oder der relevanten Anlagenteile auf der Bildanzeigeeinheit durch Prozeßwerte dargestellt. Dies eröffnet dem Bedienpersonal die Möglichkeit, diese Eigenschaften gezielt, schnell und einfach verändern zu können, um für die vorliegende Störung relevante Objekte besser sehen zu können. Beispielsweise kann das Bedienpersonal die angezeigte dreidimensionale Szene auf der Bildanzeigeinheit rotieren lassen und deren Größe, Farbe und Skalierung gezielt verändern.

Die Figur 4 zeigt ein Blockschaltbild einer Vorrichtung zur Prozeßvisualisierung, wie sie im Zusammenhang mit dem oben beschriebenen Verfahren verwendet werden kann. Diese Vorrichtung weist Detektoren bzw. Sensoren 1, 2, 3, 4, 5 auf, deren Ausgangssignale dem Prozeßrechner 6 zugeführt werden. Der Prozeßrechner 6 ist weiterhin mit einer Bedieneinheit 7, einem Speicher 8 und einer Bildanzeigeeinheit 9 verbunden.

Im normalen Prozeßzustand steuert der Prozeßrechner 6 unter Verwendung von im Speicher 8 abgespeicherten zweidimensionallen Darstellungen eine Anzeige zugehöriger Bilder auf der Bildanzeigeeinheit 9.

Beim Auftreten einer Störung ermittelt der Prozeßrechner 6 durch eine Auswertung der ihm von den Detektoren bzw. Sensoren 1, 2, 3, 4, 5 zugeführten Signale den Fehlerort, ermittelt die für diesen Fehlerort relevanten Objekte der Anlage, überprüft, ob für diese Objekte auch jeweils eine dreidimensionale Darstellung im Speicher 8 vorhanden ist, fügt die dreidimensionalen Darstellungen zu einer dreidimensionalen Szene zusammen und steuert die Anzeige dieser Szene auf der Bildanzeigeeinheit 9.

## Patentansprüche

1. Verfahren zur Prozeßvisualisierung, bei welchem mittels geeigneter Detektoren und/oder Sensoren Prozeßwerte ermittelt und zusammen mit einer bildlichen Darstellung eines oder mehrerer Anlagenteile auf einer Bildanzeigeeinheit dargestellt werden, wobei im normalen Prozeßzustand lediglich eine zweidimensionale Darstellung des oder der Anlagenteile erfolgt und beim Auftreten einer Störung automatisch eine dreidimensionale Darstellung vorgenommen wird, wobei im Rahmen der automatischen dreidimensionalen Anzeige nur diejenigen Anlagenteile dargestellt werden, die für die Störung verantwortlich sein können.

2. Verfahren nach Anspruch 1, dadurch gekennzeichn et, daß die Eigenschaften der dreidimensionalen Darstellung des oder der Anlagenteile auf der Bildanzeigeeinheit durch Prozeßwerte dargestellt werden und veränderbar sind.

3. Verfahren nach einem der vorhergehenden Ansprüche, **dadurch gekennzeichnet, daß** auf der Bildanzeigeeinheit weiterhin Betriebszustände angezeigt werden.

4. Verfahren nach einem der vorhergehenden Ansprüche, **dadurch gekennzeichnet, daß** die dargestellten dreidimensionalen Anlagenteile über Verbindungspunkte miteinander verbunden sind.

5. Vorrichtung zur Prozeßvisualisierung, welche Vorrichtung aufweist:
- Detektoren und/oder Sensoren (1, 2, 3, 4, 5) zur Ermittlung von Prozesswerten
- eine Bildanzeigeeinheit (9), die zur Anzeige der Prozeßwerte zusammen mit einer bildlichen Darstellung eines oder mehrere Anlagenteile vorgesehen ist,
- eine mit den Detektoren und/oder Sensoren (1, 2, 3, 4, 5) verbundene Signalverarbeitungseinheit (6), die zu einer dynamischen und automatischen Zusammenstellung einer dreidimensionalen Szene und deren Anzeige auf der Bildanzeigeeinheit (9) dient; und
- eine Speichereinheit (8), in welcher sowohl zweidimensionale als auch dreidimensionale Objektdarstellungen abgespeichert sind;
- wobei die Signalverarbeitungseinheit (6) die Anzeige auf der Bildanzeigeeinheit (9) derart steuert, daß im normalen Prozeßzustand eine zweidimensionale Darstellung und beim Vorliegen einer Störung automatisch eine dreidimensionale Darstellung des oder der Anlagenteile erfolgt, die für die Störung verantwortlich sein können.

6. Vorrichtung nach Anspruch 5, **dadurch gekennzeichnet, daß** sie eine Bedieneinheit (7) aufweist, mittels der die Eigenschaften der dreidimensionalen Darstellung veränderbar sind.

## Claims

1. Method for process visualizing in which process values are determined by means of appropriate detectors and/or sensors and are displayed on a visual display unit together with a visual representation of one or more plant components, whereby in the normal process state only a two-dimensional representation of the plant component or components appears, and whereby a three-dimensional representation automatically appears when a malfunction occurs, in which case only those plant components that could be responsible for the malfunction are displayed within the automatic three-dimensional view.

2. Method according to Claim 1, **characterized in that** the properties of the three-dimensional representation of the plant component or components are displayed on the screen by means of process values and can be changed.

3. Method according one of the above claims, **characterized in that** the operating states continue to be displayed on the screen.

4. Method according one of the above claims, **characterized in that** the three-dimensional plant components displayed are linked together via interconnection points.

5. Device for process visualizing, such device having
- detectors and/or sensors (1, 2, 3, 4, 5) for determining process values,
- a visual display unit (9) which is provided for displaying the process values together with a visual representation of one or more plant components,
- a signal processing unit (6) connected to the detectors and/or sensors (1, 2, 3, 4, 5), the function of said signal processing unit being to dynamically and automatically assemble a three-dimensional view, and to display this view on the visual display unit (9); and
- a memory unit (8) in which both two-dimensional and three-dimensional object representations are stored;
- whereby the signal processing unit (6) controls the image displayed on the visual display unit (9) such that a two-dimensional representation is shown during the normal process state, and, if a malfunction occurs, a three-dimensional representation of the plant component or components that might be responsible for the malfunction automatically appears.

6. Device according to Claim 5, **characterized in that** it has an operator station (7) by means of which the properties of the three-dimensional representation can be changed.

## Revendications

1. Procédé de visualisation de processus, dans lequel on détermine au moyen de détecteurs et/ou de capteurs appropriés des valeurs de processus et on les représente, ensemble avec une représentation imagée d'une ou de plusieurs parties d'installation, sur une unité d'affichage d'images, dans lequel, lorsque le processus est à l'état normal, il se produit seulement une représentation en deux dimensions de la partie d'installation ou des parties de l'installation, et, lorsqu'il survient une panne, il s'effectue automatiquement une représentation en trois dimensions, dans lequel, dans le cadre de l'affichage automatique en trois dimensions, on ne représente que les parties de l'installation qui peuvent être responsables de la panne.

2. Procédé suivant la revendication 1, **caractérisé en ce que** l'on représente et l'on peut modifier les propriétés de la représentation en trois dimensions de la partie d'installation ou des parties d'installation sur l'unité d'affichage d'images par des valeurs de processus.

3. Procédé suivant l'une des revendications précédentes, **caractérisé en ce que** l'on affiche sur l'unité d'affichage d'images, en outre, des états de fonctionnement.

4. Procédé suivant l'une des revendications précédentes, **caractérisé en ce que** l'on relie entre elles les parties d'installation représentées en trois dimensions par des points de liaison.

5. Dispositif de visualisation de processus, qui comprend :
- des détecteurs et/ou des capteurs (1, 2, 3, 4, 5) de détermination de valeurs de processus ;
- une unité (9) d'affichage d'images, qui est prévue pour afficher des valeurs de processus ensemble avec une représentation imagée d'une partie d'installation ou de plusieurs parties d'installation ;
- une unité (6) de traitement du signal, qui est reliée aux détecteurs et/ou capteurs (1, 2, 3, 4, 5) et qui sert à l'obtention d'une composition dynamique et automatique d'une scène en trois dimensions et à son affichage sur l'unité (9) d'affichage d'image ; et
- une unité (8) de mémoire, dans laquelle sont mémorisées des représentations d'objets tant en deux dimensions qu'en trois dimensions ;
- dans laquelle l'unité (6) de traitement du signal commande les indications sur l'unité (9) d'affichage d'images de façon à ce que, lorsque le processus est à l'état normal, il se produise une représentation en deux dimensions et, lorsque survient une panne, il se produise automatiquement une représentation en trois dimensions de la partie d'installation ou des parties de l'installation qui peuvent être responsables de la panne.

6. Dispositif suivant la revendication 5, **caractérisé en ce qu'**il comporte une unité de service, au moyen de laquelle les propriétés de la représentation en trois dimensions peuvent être modifiées.
